# EUROPÄISCHE PATENTSCHRIFT

(11) **EP 2 225 126 B1**
(45) Veröffentlichungstag und Bekanntmachung des Hinweises auf die Patenterteilung: **16.03.2011**
(21) Anmeldenummer: 08804901.0
(22) Anmeldetag: 30.09.2008
(51) Int. Cl.: B60R 21/013

(54) **STEUERGERÄT UND VERFAHREN ZUR ANSTEUERUNG VON PERSONENSCHUTZMITTELN**
CONTROLLER AND METHOD FOR ACTIVATING PERSONAL PROTECTION MEANS
APPAREIL DE COMMANDE ET PROCEDE POUR COMMANDER DES MOYENS DE PROTECTION DES PERSONNES

(30) Priorität: 28.11.2007 DE 102007057137
(43) Veröffentlichungstag der Anmeldung: 08.09.2010
(73) Patentinhaber: Robert Bosch GmbH, 70442 Stuttgart (DE)
(72) Erfinder: MELCHERT, Jens, 70839 Gerlingen (DE); LANG, Gunther, 70563 Stuttgart (DE)
(86) Internationale Anmeldenummer: PCT/EP2008/063055
(87) Internationale Veröffentlichungsnummer: WO 2009/068346

(56) Entgegenhaltungen:
- EP-A- 1 386 802
- DE-A1-102004 021 648
- DE-A1-102007 017 483

## Beschreibung

### Stand der Technik

Die Erfindung betrifft ein Steuergerät bzw. ein Verfahren zur Ansteuerung von Personenschutzmitteln nach der Gattung der unabhängigen Patentansprüche.

Aus DE 103 17 640 A1 ist es bekannt, in Abhängigkeit von einem Fahrdynamiksignal einen Schwellwert für das Signal eines Unfallsensors zu verändern. Damit werden die Personenschutzmittel in Abhängigkeit von dem Fahrdynamiksignal und dem Signal des Unfallsensors angesteuert. DE 102004021 648 A1 offenbart ein Steuergerät gemäß dem Oberbegriff des Anspruchs 1.

### Offenbarung der Erfindung

Das erfindungsgemäße Steuergerät zur Ansteuerung von Personenschutzmitteln und das erfindungsgemäße Verfahren zur Ansteuerung von Personenschutzmitteln mit den Merkmalen der unabhängigen Patentansprüche haben demgegenüber den Vorteil, dass der Offset einer Airbagbeschleunigungssensorik in Abhängigkeit von einem Fahrdynamiksignal durch eine Offsetkorrekturschaltung korrigiert wird, so dass der zu berücksichtigende Toleranzbereich für diese Airbagbeschleunigungssensorik erheblich geringer ausfällt. Damit ist auch eine Trennbarkeit zwischen Auslöse- und Nichtauslösefällen leichter möglich. Insgesamt wird damit die Anzahl der Fehlauslösungen reduziert.

Das Fahrdynamiksignal eignet sich besonders zu einer Offsetkompensation, da beispielsweise die Fahrdynamikregelung Beschleunigungssensoren aufweist, die bis 2g messen sollen und somit einen weit geringeren Messbereich aufweisen, als die Airbagbeschleunigungssensorik, die einen Messbereich in der Größenordnung von 30 bis 500g aufweist. Damit ist die Auflösung der Fahrdynamiksensorik erheblich feiner, als die der Airbagsensorik. Folglich eignet sich diese Fahrdynamiksensorik besonders gut, um die Airbagbeschleunigungssensorik bezüglich ihres Offsets zu korrigieren. Dies gilt insbesondere dann, wenn die Airbagbeschleunigungssensorik selbst schon eine interne Sensoroffsetregelung aufweist. Auch in diesem Fall hilft die Erfindung den Toleranzbereich weiter einzuschränken. Darüber hinaus ist von Vorteil, dass die vorliegenden Komponenten in vielen Fahrzeugen bereits vorhanden sind, so dass kaum Mehraufwand, außer der Implementierung der rechnerischen Sensoroffsetkorrektur, entsteht.

Das erfindungsgemäße Steuergerät ist beispielsweise ein klassisches Airbagsteuergerät oder auch ein Steuergerät, das sowohl für Airbag-, als auch für Fahrdynamikanwendungen verwendet werden kann oder ein Steuergerät, das zusätzlich zu den Airbagfunktionen auch eine Fahrdynamiksensorik aufweist. Weiterhin kann das Steuergerät lediglich dazu vorgesehen sein, Sensorsignale zu verarbeiten und daraus Steuersignale zu erzeugen. Es ist demnach möglich, dass dieses Steuergerät ohne eine eigene Sensorik vorhanden ist. Kennzeichnend ist demnach die Schnittstelle zur Bereitstellung der Sensorsignale und die Auswerteschaltung, sowie die Offsetkorrekturschaltung.

Personenschutzmittel sind vorliegend aktive und passive Personenschutzmittel wie Airbags, Gurtstraffer, crashaktive Kopfstützen und Bremsen, sowie eine Fahrdynamikregelung. Ansteuern bedeutet in diesem Zusammenhang ein Aktivier dieser Personenschutzmittel.

Die Schnittstellen sind vorliegend hardware- und/oder softwaremäßig ausgebildet. Dabei können die Schnittstellen beispielsweise als Softwareelement auf einem Mikrocontroller oder als ICs oder als Teile von ICs oder aus mehreren ICs, oder aus diskreten Bausteinen aufgebaut sein.

Die Airbagbeschleunigungssensorik kann in einem Sensorcluster, im Steuergerät selbst, ausgelagert als Upfrontsensorik und/oder Seitenaufprallsensorik angeordnet sein. Die Airbagsensorik kann dabei in ein oder mehrere Empfindlichkeitsrichtungen Beschleunigungen erfassen. Das Beschleunigungssignal der Airbagbeschleunigungssensorik kann demnach ein oder mehrere Sensorsignale umfassen.

Das Fahrdynamiksignal wird gemäß den abhängigen Ansprüchen ausgebildet. Dabei kann auch das Fahrdynamiksignal eine Mehrzahl von Sensorsignalen aufweisen. Die Fahrdynamiksensorik kann in einem Fahrdynamiksteuergerät oder ausgelagert in einem Airbagsteuergerät oder in einem Sensorcluster vorhanden sein. Bei der Fahrdynamiksensorik handelt es sich um Beschleunigungssensoren, und Sensoren zur Erfassung der Fahrzeugeigengeschwindigkeit handeln. Dazu gehören insbesondere Raddrehzahlsensoren. Es ist möglich, eine Offsetkorrektur für eine Sensorik zur Erkennung eines Überrollvorgangs vorzusehen, wenn beispielsweise Drehratensensoren in der Fahrdynamikregelung feiner auflösen als die Drehratensensoren zur Erkennung des Überrollvorgangs.

Die Auswerteschaltung ist vorliegend eine Mikrocontroller oder ein anderer Prozessor. Auch ein anmeldungsspezifischer integrierter Schaltkreis oder eine Mehrzahl von solchen Schaltkreisen kommen in Frage, oder die Auswerteschaltung kann aus diskreten Bauelementen aufgebaut sein. Die Auswerteschaltung kann insbesondere auch eine Mehrzahl von Prozessoren aufweisen.

Unter der Offsetkorrekturschaltung kann es sich um eine Schaltung, die in Hardware realisiert ist, oder um ein Softwareelement, oder um eine Kombination daraus handeln. Insbesondere ist es möglich, dass die Offsetkorrekturschaltung eine Funktion ist, die die Auswerteschaltung als Mikrocontroller durchführt. Es ist möglich, dass auf einem IC ein Teil dieses ICs der Offsetkorrekturschaltung zugeordnet ist.

Ein Offset führt beim Sensorsignal zu einer Abweichung, die durch Temperatur oder elektromagnetische Einstrahlung oder andere Effekte verursacht ist. Sie bewirkt, dass nicht das wahre Signal, sondern dieses wahre Signal geändert um diesen Offset ausgegeben wird. Bei einem aktiven Airbagauslösealgorithmus wirkt sich ein solcher Offset auf die Beschleunigungssignale selbst nur gering aus, da diese Beschleunigungssignale bei einem aktiven Airbagauslösealgorithmus bereits sehr hoch sind. Auf das integrierte oder zweifach integrierte Bescheunigungssignal hat ein solcher Offset dagegen größere Auswirkungen und führt damit zu einem recht großen Toleranzbereich. Auch bei schwächeren Signalen, bei welchen der Offsetstärke ins Gewicht fällt, ist dies der Fall. Ein solcher Toleranzbereich schränkt die Leistungsfähigkeit von Airbagapplikationen ein und führt zu einer schlechteren Trennbarkeit zwischen Auslöse- und Nichtauslösefällen.

Von diesem Sensoroffset zu unterscheiden, sind schwache, durch Fahrmanöver bedingte Signale ähnlicher Größenordnung, die im Gegensatz zum Sensoroffset aber echte Messwerte darstellen.

Korrektur meint, dass zunächst erkannt wird, ob das Signal des Airbagsensors durch echte Fahrmanöver oder durch einen Sensoroffset verursacht wurde und im letzten Fall dann der Offset kompensiert wird.

Durch die in den abhängigen Ansprüchen aufgeführten Maßnahmen und Weiterbildungen sind vorteilhafte Verbesserungen des in den unabhängigen Patentansprüchen angegebenen Steuergeräts zur Ansteuerung von Personenschutzmitteln bzw. das in den unabhängigen Patentansprüchen angegebenen Verfahrens zur Ansteuerung von Personenschutzmitteln möglich.

Vorteilhaft ist, dass eine Deaktivierungsschaltung vorgesehen ist, die die Offsetkorrekturschaltung in Abhängigkeit von einem Schwellwertvergleich des Airbagbeschleunigungssignals deaktiviert. Dieser Schwellwert liegt in der Größenordnung der höchsten durch Fahrmanöver erzielbaren Signale. Deaktivierung bedeutet im folgenden, dass der vor Erreichen der Deaktivierungsschwelle ermittelte Korrekturwert gehalten wird, d.h. die Offsetkorrektur des Airbagsensors arbeitet mit diesem Korrekturwert, solange sich die Signale über der Deaktivierungsschwelle befinden. Die Deaktivierungsschaltung kann hard- und/oder softwaremäßig ausgebildet sein, entsprechend der Offsetkorrekturschaltung. Üblicherweise kann die Deaktivierungsschaltung als Softwareelement auf den Mikrocontroller als der Auswerteschaltung vorhanden sein.

Vorteilhafterweise ist das Fahrdynamiksignal wie oben angegeben auch ein Beschleunigungssignal, wobei die Fahrdynamiksensorik, da sie nur für ein weit geringeres Beschleunigungssignal ausgelegt ist, eine größere Empfindlichkeit aufweist und somit besonders geeignet ist eine Offsetkorrektur der Airbagbeschleunigungssensorik durchzuführen.

Weiterhin ist es von Vorteil, dass die Offsetkorrekturschaltung für den Vergleich einen Differenzbilder zwischen dem wenigstens einen ersten und dem wenigstens einen zweiten Beschleunigungssignal und einem Schwellwertentscheider für die daraus entstehende Differenz aufweist. D. h. die Beschleunigung, die die Airbagbeschleunigungssensorik und die Beschleunigung, die die Fahrdynamikbeschleunigungssensorik ermittelt, wird subtrahiert und dies wird vom Beschleunigungssignal abgezogen, um den Offset zu erhalten. Der Differenzbilder kann hard- und/oder softwaremäßig ausgebildet sein, was auch für den Schwellwertentscheider gilt, entsprechend der Ausführung der Offsetkorrekturschaltung.

Es ist jedoch auch von Vorteil, dass die Offsetkorrekturschaltung das Beschleunigungssignal der Airbagbeschleunigungssensorik für den Vergleich integriert, wobei das Fahrdynamiksignal die Eigengeschwindigkeit des Fahrzeugs ist. Hierbei kann dann die Differenz zwischen zu zwei Messzeitpunkten ermittelte Eigengeschwindigkeit mit der integrierten Beschleunigung verglichen werden. Dann kann vom Beschleunigungssignal diese Differenz dividiert durch die Zeit abgezogen werden, um die Offsetkorrektur durchzuführen. Die Zeit ist demnach der Rhythmus, in dem die Eigengeschwindigkeit aktualisiert wird, beispielsweise alle 20 Millisekunden. Diese Geschwindigkeitswerte sind dabei üblicherweise auf dem CAN-Bus vorhanden. Alternativen hierzu sind möglich.

Vor den Differenzbildern kann eine Tiefpassfilterung vorgesehen sein, um kleinere Schwankungen insbesondere des fein auflösenden Fahrdynamiksensors auszugleichen. Vorteilhafterweise ist die Zeitkonstante dieser Tiefpassfilterung aber kleiner als die der sensorinternen Offsetregelung, um die gewünschte schnellere Korrektur zu ermöglichen.

Die Offsetkorrekturschaltung wird beispielsweise durch die Deaktivierungsschaltung dann deaktiviert, wenn das erste Beschleunigungssignal mehr als 2g beträgt oder mehr als die vorgegebene Rauschschwelle ist. Die Rauschschwelle kann beispielsweise bei 3 bis 6g liegen.

Ausführungsbeispiele der Erfindung sind in den Zeichnungen dargestellt und werden in der nachfolgenden Beschreibung näher erläutert.

Es zeigen:
- Figur 1: ein Blockschaltbild mit dem erfindungsgemäßen Steuergerät und angeschlossenen Komponenten,
- Figur 2: ein weiteres Blockschaltbild des Steuergeräts,
- Figur 3: ein weiteres Blockschaltbild des Steuergeräts,
- Figur 4: ein Signalablaufdiagramm,
- Figur 5: ein weiteres Blockschaltbild des Steuergeräts,
- Figur 6: ein weiteres Signalablaufdiagramm,
- Figur 7: ein weiteres Signalablaufdiagramm,
- Figur 8: ein Flussdiagramm des erfindungsgemäßen Verfahrens und
- Figur 9: ein Beschleunigungszeitdiagramm.

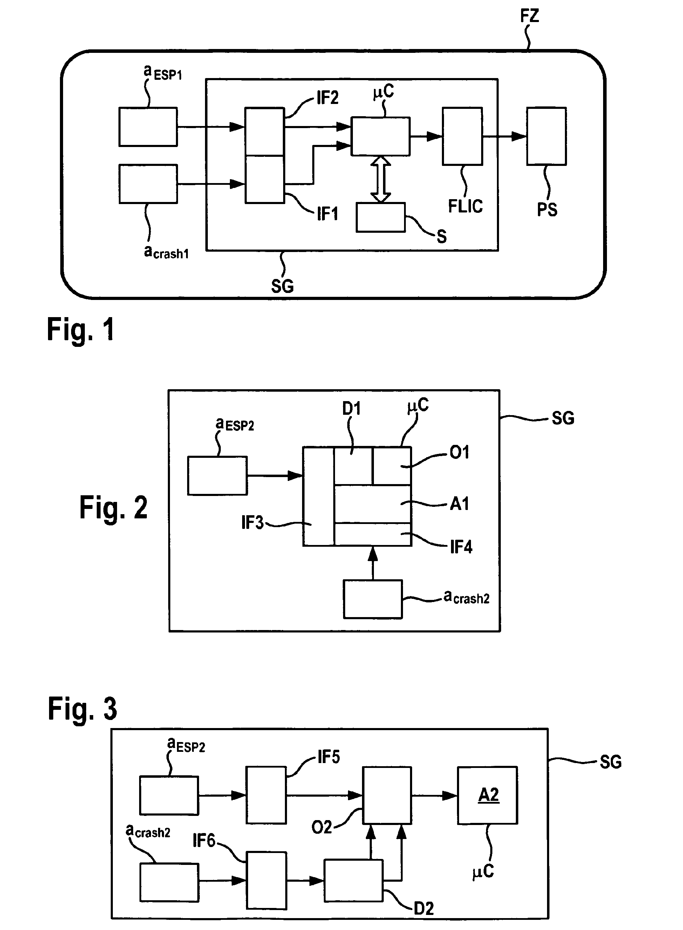

Figur 1 zeigt das erfindungsgemäße Steuergerät SG in einem Fahrzeug FZ, wobei das Steuergerät SG von einer Beschleunigungssensorik acrash1 und einer weiteren Beschleunigungssensorik aESP1 Signale erhält, die sich außerhalb des Steuergeräts jeweils befinden. Die Beschleunigungssensoriken aESP1 und acrash1 sind an Schnittstellen IF1 und IF2 jeweils angebunden, wobei sich diese Schnittstellen IF1 und IF2 im Steuergerät SG vorliegend als integrierte Schaltkreise befinden. Die Schnittstellen IF1 und IF2 übertragen beispielsweise über den sogenannten SPI (Serial Peripherial Interface) Bus die Sensordaten an die Auswerteschaltung, den Mikrocontroller µC. Der Mikrocontroller µC verarbeitet diese Beschleunigungssignale unter der Verwendung von Daten, die er aus seinem Speicher S lädt. In Abhängigkeit von den Signalen entscheidet der Mikrocontroller µC, ob ein Ansteuersignal erzeugt werden soll oder nicht. Wird eines erzeugt, dann überträgt der Mikrocontroller µC ein Ansteuersignal an die Ansteuerschaltung FLIC. Die Ansteuerschaltung FLIC besteht vorliegend aus einer Mehrzahl von integrierten Schaltkreisen, die Leistungsschalter und Mittel zur Verarbeitung des Ansteuersignals aufweisen. Zu solchen Mitteln zählen beispielsweise einfache logische Schaltkreise. Die Ansteuerschaltung FLIC steuert dann die Personenschutzmittel PS an, und zwar durch Bestromung von Zündelementen oder von einer elektromagnetischen Aktuatorik.

Erfindungsgemäß führt der Mikrocontroller µC anhand der Beschleunigungssignale acrash1 und aESP1 eine Offsetkorrektur des Signals acrash1 durch. Dazu wird beispielsweise das Signal acrash1 derart korrigiert, dass von ihm eine Differenz aus dem tiefpassgefilteren acrash1 Signal und dem tiefpassgefilterten aESP1-Signal durchgeführt wird.

Figur 2 zeigt ein weiteres Blockschaltbild, des erfindungsgemäßen Steuergeräts SG. Nunmehr befinden sich die Beschleunigungssensoriken acrash2 und aESP2 im Steuergerät SG selbst. Dabei sind dann diese Beschleunigungssensoriken acrash2 und aESP1 an Softwareschnittstellen IF4 und IF3 des Mikrocontrollers µC angeschlossen. Die Offsetkorrektur wird dabei durch die Offsetkorrekturschaltung O1, die vorliegend als Softwareelement auf dem Mikrocontroller µC vorgesehen ist, durchgeführt. Dabei wird jedoch eine Prüfung durchgeführt, ob diese Offsetkorrektur nicht ausgeschaltet wird. Dies wird von der Deaktivierungsschaltung D1 durchgeführt. Die Deaktivierungsschaltung D1, die ebenfalls als Softwareelement auf dem Mikrocontroller µC vorgesehen ist, prüft die Höhe des Beschleunigungssignals acrash2. Vorliegend wird das Signal acrash2 mit der Rauschschwelle verglichen, die bei 3 bis 6g liegt. Liegt das Beschleunigungssignal acrash2 darüber, dann wird die Offsetkorrekturschaltung deaktiviert und der alte Korrekturwert gehalten. Anstatt der Rauschschwelle können auch andere Schwellen die niedriger oder höher sind, verwendet werden. Wird eine Schwelle verwendet, die höher ist als die Rauschschwelle, dann kommt insbesondere zum Tragen, dass das Beschleunigungssignal schon integriert wurde. Wurde die Offsetkorrektur durchgeführt oder nicht, dann zumindest erhält der Auswertealgorithmus A1 die Beschleunigungssignale zur weiteren Verarbeitung, um zu entscheide, ob das Ansteuersignal erzeugt werden soll oder nicht. Dazu können beispielsweise Auslöseschwellwerte verwendet werden, die vorab definiert wurden und insbesondere auch dynamisch ausgeführt werden können.

Figur 3 zeigt eine weitere Ausführungsvariante des erfindungsgemäßen Steuergeräts SG. Das Beschleunigungssignal acrash2 wird an eine Schnittstelle IF6 angebunden, die hardwaremäßig vorgesehen ist. Das Beschleunigungssignal geht dann in eine Deaktivierungsschaltung D2, die die oben dargestellte Funktion ausführt. Die Deaktivierungsschaltung ist mit zwei Ausgangsleitungen an eine Offsetkorrekturschaltung O2 angeschlossen. In die Offsetkorrekturschaltung geht auch das Fahrdynamikbeschleunigungssignal aESP2 über die Schnittstelle IF5 ein. Das Offset korrigierte Signal wird von der Offsetkorrekturschaltung O2 einem Mikrocontroller µC übertragen, auf dem der Auswertealgorithmus A2 abläuft.

Die Deaktivierungsschaltung D2 ist mit einer Signalisierungsleitung an die Offsetschaltung O2 angeschlossen, um anzuzeigen, ob die Offsetkorrekturschaltung deaktiviert werden soll oder nicht. Über eine zweite Leitung wird das Beschleunigungssignal acrash2 übertragen.

In den dargestellten Zeichnungen werden nur die für die Erfindung wesentlichen Elemente dargestellt. Andere für den Betrieb notwendigen Elemente werden der Einfachheit halber weggelassen.

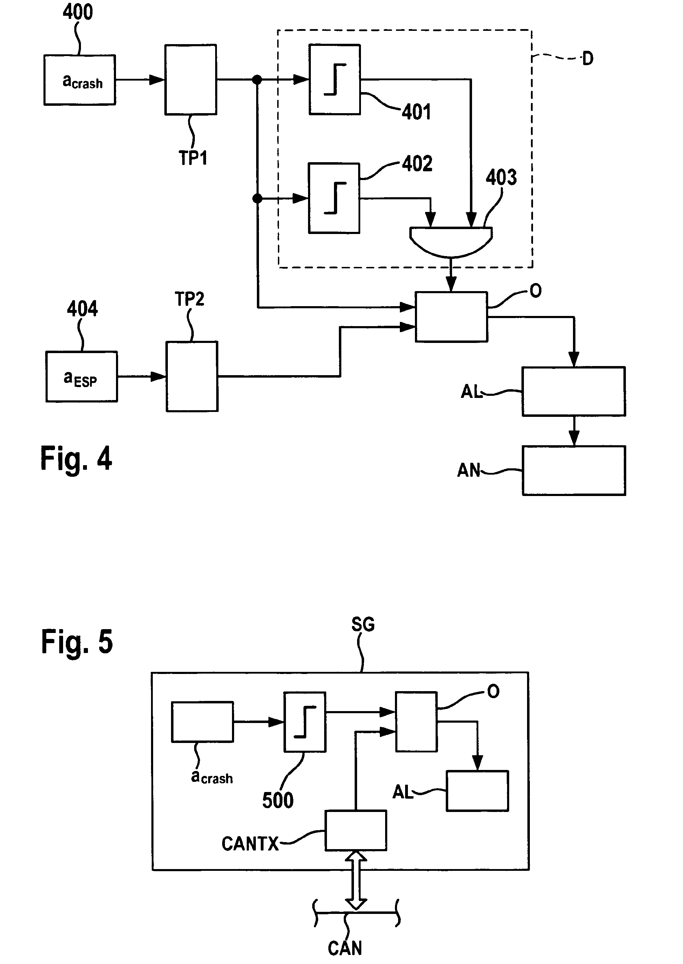

Figur 4 zeigt ein Signalablaufdiagramm um das erfindungsgemäße Diagramm zu erläutern. Im Block 400 wird das Airbagbeschleunigungssignal acrash bereitgestellt. Dies wird dann im nachfolgenden Block TP1 Tiefpass gefiltert. In der Deaktivierungsschaltung D wird das tiefpassgefilterte Airbagbeschleunigungssignal auf einen Schwellwertentscheider 401 gegeben. Weiterhin wird es auf einen Schwellwertentscheider 402 gegeben. Die Ausgänge der Schwellwertentscheider 401 und 402 werden an ein Oder-Gatter 403 übertragen. Damit wird das Crashsignal auf mehrere Schwellwerte geprüft, um zu entscheiden, ob die Offsetkorrektur ausgeschaltet werden soll oder nicht. Es ist möglich, dass nur ein einziger Schwellwert geprüft wird. In die Offsetkorrekturschaltung geht das tiefpassgefilterte Airbagbeschleunigungssignal ein. Alternativ ist es möglich, dass das Airbagbeschleunigungssignal ohne die Tiefpassfilterung eingeht. In die Offsetkorrekturschaltung geht weiterhin, dass im Block 404 bereitgestellte Fahrdynamikbeschleunigungssignal, dass durch den Tiefpassfilter TP2 tiefpassgefiltert wurde.

Die Offsetkorrekturschaltung führt, wenn das Airbagbeschleunigungssignal nicht zu groß ist, die Offsetkorrektur in der beschriebenen Weise durch, und liefert das um die offsetkorrigierte Beschleunigungssignal und das Fahrdynamiksignal an den Airbagalgorithmus AL. Dieser verarbeitet die Beschleunigungssignale wie beispielsweise aus dem Stand der Technik bekannt. Im Block AN wird dann das Ansteuersignal gegebenenfalls erzeugt, wenn der Airbagauslösealgorithmus anzeigt, dass ein Auslösefall vorliegt. Es ist möglich, dass in den Airbagauslösealgorithmus AL die ungefilterten Beschleunigungssignale eingehen.

Figur 5 zeigt ein weiteres Blockschaltbild des erfindungsgemäßen Steuergeräts. Nunmehr wird das Beschleunigungssignal acrash integriert und zwar im Block 500. Durch die Offsetkorrekturschaltung O wird das integrierte Beschleunigungssignal mit der Differenz der Eigengeschwindigkeit zwischen zwei Messzeitpunkten verglichen. Die Eigengeschwindigkeit wird von dem CAN-Transeiver CANTX bereitgestellt. Der CAN-Transeiver CANTX ist mit dem CAN-Bus CAN verbunden. Die Offsetkorrekturschaltung O liefert dann das Auswerteergebnis an den Airbagalgorithmus, der die Beschleunigungssignale dann in der bekannten Art und Weise auswertet.

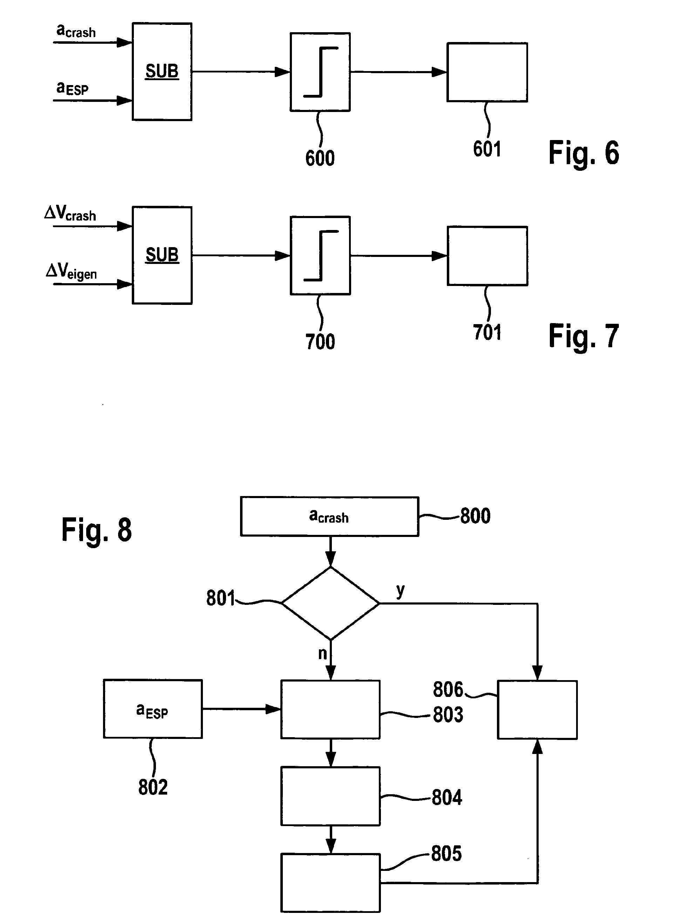

Figur 6 zeigt ein weiteres Signalablaufdiagramm. Das Beschleunigungssignal acrash und das Beschleunigungssignal aESP werden im Block SUB voneinander subtrahiert. Diese Differenz wird durch den Schwellwertentscheider 600 geprüft, um dann im Verfahrensschritt 601 die oben beschriebene Korrektur durchzuführen. Es ist möglich, dass dieser Schwellwertvergleich entfällt.

Figur 7 zeigt ein weiteres Ausführungsbeispiel. Nunmehr wird das integrierte Beschleunigungssignal, dass zwischen zwei Messpunkten für die Eigengeschwindigkeit integriert wurde, mit der Differenz der Eigengeschwindigkeit δV eigen voneinander subtrahiert. Wiederum kann der optionale Schwellwert 700 diese Differenz mit einem vorgegebenen Wert vergleichen, um dann in den Verfahrensschritten 701 die Korrektur durchzuführen.

Figur 8 zeigt ein Flussdiagramm des erfindungsgemäßen Verfahrens. Im Verfahrenschritt 800 wird das Airbagbeschleunigungssignal acrash bereitgestellt. Im Verfahrensschritt 801 wird geprüft, ob die Offsetkorrektur deaktiviert werden soll. Wenn ja, wird im Verfahrensschritt 806 der Auslösealgorithmus ausgeführt und der alte Korrekturwert gehalten. Wenn nein, dann wird dem Verfahrensschritt 803 das Airbagbeschleunigungssignal und das Beschleunigungssignal 802 der Fahrdynamiksensorik für eine Differenzbildung verwendet. Diese Differenz kann optional Verfahrensschritt 804 einem Schwellwertvergleich unterzogen werden. Im Verfahrensschritt 805 wird die Offsetkorrektur durchgeführt, um das offsetkorrigierte Signal dann dem Algorithmus 806 zuzuführen.

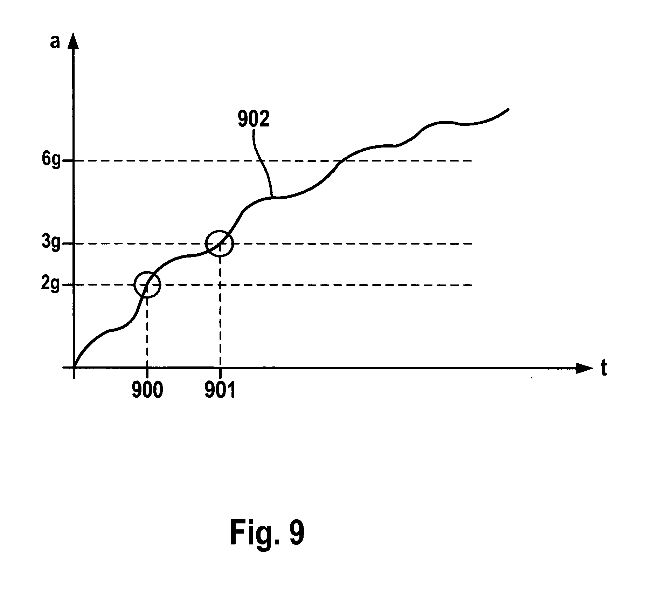

Figur 9 erläutert in einem Beschleunigungszeitdiagramm unterschiedliche Beschleunigungsschwellwerte, um die Offsetkorrektur zu aktivieren. Es wird ein Beschleunigungssignal 902 dargestellt, das sich über der Zeit erhöht. Dabei kann die Offsetkorrektur bereits bei einer Schwelle von 2g zum Zeitpunkt 900 deaktiviert werden. Alternativ ist es möglich im Bann zwischen 3g und 6g die Deaktivierung durchzuführen, und zwar um dann beim Überschreiten der Rauschschwelle, die beispielsweise beim Zeitpunkt 901 überschritten wurde, die Offsetkorrektur auszuschalten und den alten Korrekturwert zu halten.

## Patentansprüche

1. Steuergerät (SG) zur Ansteuerung von Personenschutzmittel (PS) mit:
- einer ersten Schnittstelle (IF1), die wenigstens ein erstes Beschleunigungssignal einer Airbagbeschleunigungssensorik bereitstellt,
- einer zweiten Schnittstelle (IF2), die wenigstens ein Fahrdynamiksignal einer Fahrdynamiksensorik bereitstellt,
- einer Auswerteschaltung (µC), die in Abhängigkeit von dem wenigstens einen ersten Beschleunigungssignal und dem Fahrdynamiksignal, die Personenschutzmittel (PS) ansteuert,
- eine Offsetkorrekturschaltung (O), die das des wenigstens eine erste Beschleunigungssignal um einen Offset durch einen Vergleich mit dem Fahrdynamiksignal korrigiert, wobei das Fahrdynamiksignal wenigstens ein zweites Beschleunigungssignal ist, **dadurch gekennzeichnet dass**, das zweite Beschleunigungssignal einen geringeren Messbereich als das erste Beschleunigungssignal aufweist.

2. Steuergerät nach Anspruch 1, **dadurch gekennzeichnet, dass** eine Deaktivierungsschaltung (D) vorgesehen ist, die die Offsetkorrekturschaltung (O) in Abhängigkeit von wenigstens einem Schwellwertvergleichs des wenigstens einen ersten Beschleunigungssignals deaktiviert und einen Korrekturwert, der vor dem Schwellwertvergleich erreicht wurde, hält.

3. Steuergerät nach Anspruch 1, **dadurch gekennzeichnet, dass** die Offsetkorrekturschaltung (O) für den Vergleich einen Differenzbilder zwischen dem wenigstens einen ersten und wenigstens einen zweiten Beschleunigungssignal und einen Schwellwertentscheider für die Differenz aufweist.

4. Steuergerät nach Anspruch 3, **dadurch gekennzeichnet, dass** vor dem Differenzbilder eine Tiefpassfilterung vorgesehen ist, die eine Zeitkonstante aufweist, die kürzer als eine sensorinteme Offsetregelung ist.

5. Steuergerät nach Anspruch 2, **dadurch gekennzeichnet, dass** der Schwellwertvergleich derart durchgeführt wird, dass die Offsetkorrekturschaltung (O) deaktiviert wird, wenn das wenigstens eine erste Beschleunigungssignal mehr als 2g beträgt oder mehr als eine vorgegebene Rauschschwelle beträgt.

6. Verfahren zur Ansteuerung von Personenschutzmittel (PS), wobei in Abhängigkeit von wenigstens einem ersten Beschleunigungssignal und einem Fahrdynamiksignal die Personenschutzmittel angesteuert werden, wobei das wenigstens eine erste Beschleunigungssignal um einen Offset durch einen Vergleich mit dem Fahrdynamiksignal korrigiert wird, dass für den Vergleich eine Differenz zwischen dem wenigstens einen ersten Beschleunigungssignals und dem wenigstens einen zweiten Beschleunigungssignal als dem Fahrdynamiksignal gebildet wird, **dadurch gekennzeichnet**, diese Differenz einem Schwellwertentscheider zugeführt wird, wobei das zweite Beschleunigungssignal einen geringeren Messbereich als das erste Beschleunigungssignal aufweist.

7. Verfahren nach Anspruch 7, **dadurch gekennzeichnet, dass** die Offsetkorrektur deaktiviert wird, wenn das wenigstens eine erste Beschleunigungssignal über 2g oder über einer vorgegebenen Rauschschwelle liegt.

## Claims

1. Controller (SG) for activating personal protection means (PS), having:
- a first interface (IF1) which makes available at least a first acceleration signal to an airbag acceleration sensor system,
- a second interface (IF2) which makes available at least one movement dynamics signal to a movement dynamics sensor system,
- an evaluation circuit (µC) which activates the personal protection means (PS) as a function of the at least one first acceleration signal and the movement dynamics signal,
- an offset correction circuit (O) which corrects the at least one first acceleration signal by an offset by a comparison with the movement dynamics signal, wherein the movement dynamics signal has at least a second acceleration signal, **characterized in that** the second acceleration signal has a smaller measuring range than the first acceleration signal.

2. Controller according to Claim 1, **characterized in that** a deactivation circuit (D) is provided which deactivates the offset correction circuit (O) as a function of at least one threshold value comparison of the at least one first acceleration signal, and retains a correction value which has been obtained from the threshold value comparison.

3. Controller according to Claim 1, **characterized in that** the offset correction circuit (O) has, for the comparison, a difference former between the at least one first acceleration signal and at least one second acceleration signal, and a threshold value decision element for the difference.

4. Controller according to Claim 3, **characterized in that** a low-pass filtering means, which has a time constant which is shorter than a sensor-internal offset regulator, is provided upstream of the difference former.

5. Controller according to Claim 2, **characterized in that** the threshold value comparison is carried out in such a way that the offset correction circuit (O) is deactivated if the at least one first acceleration signal is more than 2 g or more than a predefined noise threshold.

6. Method for activating personal protection means (PS), wherein the personal protection means are activated as a function of at least a first acceleration signal and a movement dynamics signal, wherein the at least one first acceleration signal is corrected by an offset by means of a comparison with the movement dynamics signal, and, for the comparison, a difference is formed between the at least one first acceleration signal and the at least one second acceleration signal, as the movement dynamics signal, **characterized in that** this difference is fed to a threshold value decision element, wherein the second acceleration signal has a smaller measuring range than the first acceleration signal.

7. Method according to Claim 7, **characterized in that** the offset correction is deactivated if the at least one first acceleration signal is above 2 g or above a predefined noise threshold.

## Revendications

1. Appareil de commande (SG) destiné à commander des moyens (PS) de protection des personnes et présentant :
- une première interface (IF1) qui délivre un premier signal d'accélération à un ensemble de détecteurs d'accélération de coussin gonflable de sécurité,
- une deuxième interface (IF2) qui délivre au moins un signal de dynamique de roulage à un ensemble de détecteurs de dynamique de roulage,
- un circuit d'évaluation (µC) qui commande les moyens (PS) de protection des personnes en fonction du ou des premiers signaux d'accélération et du signal de dynamique de roulage et
- un circuit (O) de correction de décalage qui corrige le décalage du ou des premiers signaux d'accélération par comparaison avec le signal de dynamique de roulage, le signal de dynamique de roulage étant au moins un deuxième signal d'accélération, **caractérisé en ce que**
le deuxième signal d'accélération présente une plage de mesure plus étroite que le premier signal d'accélération.

2. Appareil de commande selon la revendication 1, **caractérisé en ce qu'**il présente un circuit de désactivation (D) qui désactive le circuit (O) de correction de décalage en fonction d'au moins une comparaison entre les valeurs de seuil du ou des premiers signaux d'accélération et qui conserve une valeur de correction qui a été atteinte avant la comparaison entre les valeurs de seuil.

3. Appareil de commande selon la revendication 1, **caractérisé en ce que** pour effectuer la comparaison, le circuit (O) de correction de décalage présente un dispositif de formation de différence entre le ou les premiers signaux d'accélération et le ou les deuxièmes signaux d'accélération et un dispositif de décision concernant la différence entre les valeurs de seuil.

4. Appareil de commande selon la revendication 3, **caractérisé en ce qu'**un filtrage passe-bas dont la constante de temps est plus courte que la régulation, interne au détecteur, du décalage, est prévu en amont du dispositif de formation de différence.

5. Appareil de commande selon la revendication 2, **caractérisé en ce que** la comparaison entre les valeurs de seuil est réalisée en désactivant le circuit (O) de correction de décalage si le ou les premiers signaux d'accélération sont supérieurs à 2 g ou sont supérieurs à un seuil de bruit prédéterminé.

6. Procédé de commande de moyens (PS) de protection des personnes dans lequel les moyens de protection des personnes sont commandés en fonction d'au moins un premier signal d'accélération et d'un signal de dynamique de roulage, un décalage du ou des premiers signaux d'accélération étant corrigé par une comparaison avec le signal de dynamique de roulage, une différence entre le ou les premiers signaux d'accélération et le ou les deuxièmes signaux d'accélération servant de signal de dynamique de roulage étant formée pour la comparaison, **caractérisé en ce que**
cette différence est apportée à un dispositif de décision de valeur de seuil, le deuxième signal d'accélération présentant une plage de mesure plus étroite que le premier signal d'accélération.

7. Procédé selon la revendication 6, **caractérisé en ce que** la correction du décalage est désactivée si le ou les premiers signaux d'accélération sont supérieurs à 2 g ou à un seuil de bruit prédéterminé.
